# EUROPEAN PATENT APPLICATION

(11) **EP 4 779 776 A1**
(43) Date of publication of application: **22.07.2026**
(21) Application number: 24922542.6
(22) Date of filing: 16.10.2024
(51) Int. Cl.: H01M 50/262, H01M 50/244, H01M 50/30, H01M 50/222, H01M 50/258, H01M 50/204, H01M 50/249

(54) **BATTERY MODULE COMPRISING RESTRAINT MEMBER AND BATTERY PACK COMPRISING RESTRAINT MEMBER**

(30) Priority: 31.01.2024 KR 20240014798
(71) Applicant: SK On Co., Ltd., Seoul 03161 (KR)
(72) Inventor: KIM, Jae-Sik, Daejeon 34124 (KR); NOH, Chang-Hyun, Daejeon 34124 (KR); PARK, Nam-Hyun, Daejeon 34124 (KR); HONG, Sung-Min, Daejeon 34124 (KR)
(74) Representative: Prüfer & Partner mbB Patentanwälte · Rechtsanwälte
(86) International application number: PCT/KR2024/015642
(87) International publication number: WO 2025/164878

(57) **Abstract**

A battery module of the present disclosure may comprise: multiple battery cells; and a thermal propagation blocking assembly positioned between at least some of the multiple battery cells. The heat propagation blocking assembly may comprise: a thermal insulation layer containing silica aerogel; a fireproof member comprising a first fireproof sheet, positioned on a first surface of the thermal insulation layer, and a second fireproof sheet, positioned on a second surface of the thermal insulation layer opposite to the first surface; and a buffer member comprising a first buffer pad positioned on the first fireproof sheet, and a second buffer pad positioned on the second fireproof sheet.

## Description

### Technical Field

The present disclosure relates to a battery module comprising a restraining member and a battery module comprising the restraining member.

### Background Art

Unlike primary batteries, secondary batteries may be charged and discharged, and thus may be applied to devices within various fields, such as digital cameras, mobile phones, laptop computers, hybrid vehicles, electric vehicles, and energy storage systems (ESS). Secondary batteries may be lithium-ion batteries, nickel-cadmium batteries, nickel-metal hydride batteries, or nickel-hydrogen batteries.

Secondary batteries are manufactured as flexible pouch-type battery cells or rigid prismatic or cylindrical can-type battery cells. A plurality of battery cells may be formed into a stacked cell assembly.

The cell assembly may be disposed within a case to form a battery module, and a plurality of battery modules may be disposed within a pack frame to form a battery pack. Battery packs may be used in various structures, such as vehicles or energy storage systems.

### Disclosure of Invention

### Technical Problem

A battery pack may include a plurality of battery modules and a pack cover covering the plurality of battery modules. In the case of thermal runaway of a battery module, flames, gases, and/or conductive particles may be emitted from the battery module. The battery pack may include a flow path space in which flames, gases, and/or conductive particles emitted from the battery module flow.

However, in a thermal runaway situation of a battery module, thermal deformation of a module housing may occur. For example, the battery module may expand, and the volume of the flow path space within the battery pack may decrease. If the volume of the flow path space decreases, flames, gases, and/or conductive particles within the battery module may not be emitted from the module, and the pressure and temperature within the battery module may increase beyond a specified level. If the pressure and temperature within the battery module increase beyond a specified level, heat may propagate between battery modules, potentially causing thermal runaway of adjacent battery modules.

An aspect of the present disclosure is to provide a battery pack in which a flow path space within a battery pack may be secured by reducing thermal deformation of a battery module.

Another aspect of the present disclosure is to provide a battery pack capable of improving assembly convenience.

Another aspect of the present disclosure is to provide a battery pack capable of reducing noise and vibration.

The battery module and battery pack of the present disclosure may be widely applied to electric vehicles, battery charging stations, and other green technology fields, such as solar and wind power generation utilizing batteries. Furthermore, the battery module and battery pack of the present disclosure may be used in eco-friendly electric vehicles and hybrid vehicles to prevent climate change by reducing air pollution and greenhouse gas emissions.

### Solution to Problem

According to an aspect of the present disclosure, a battery pack includes: a plurality of battery modules, each including a plurality of battery cells and a module housing accommodating the plurality of battery cells; a pack frame including a pack cover covering the plurality of battery modules and accommodating the plurality of battery modules; and a restraining member disposed between the plurality of battery modules and the pack cover. The restraining member may include a rigid portion connected to the plurality of battery modules and a buffer portion connected to the rigid portion and facing the pack cover.

According to an embodiment, the module housing may include a module cover covering the plurality of battery cells and including a plurality of venting hole. The battery pack may further include a flow path space located between the module cover and the pack cover and configured to allow gas occurring in the plurality of battery cells to flow. The restraining member may be located within the flow path space.

According to an embodiment, the restraining member may be located so as not to overlap the plurality of venting holes.

According to an embodiment, a cross-sectional area of the restraining member may be smaller than a sum of cross-sectional areas of the plurality of venting holes.

According to an embodiment, the restraining member may include an adhesive layer located between the rigid portion and the buffer portion.

According to an embodiment, each of the plurality of battery modules may include a mica sheet surrounding at least a portion of the module housing.

According to an embodiment, the rigid portion may include a first surface facing the buffer portion, a second surface opposite to the first surface and facing the module housing, and a third surface surrounding at least a portion of the first surface and the second surface. The buffer portion may include a fourth surface facing the battery pack, a fifth surface opposite to the fourth surface and having an accommodation recess accommodating the rigid portion, and a sixth surface surrounding at least a portion between the fourth surface and the fifth surface. The buffer portion may cover the first surface and the third surface of the rigid portion.

According to an embodiment, the mica sheet may include a coupling hole accommodating the restraining member, and the restraining member may be interference-fitted into the coupling hole, and the sixth surface of the buffer portion may contact an inner surface of the mica sheet defining the coupling hole.

According to an embodiment, the restraining member may include a fastening member inserted into the rigid portion. The restraining member may be coupled to the module housing using the fastening member.

According to an embodiment, the module housing may include a module cover having a fastening hole for accommodating at least a portion of the fastening member. The second surface of the rigid portion and the fifth surface of the buffer portion may be disposed on the module cover.

According to an embodiment, the buffer portion may include at least one of silicone, polyurethane, and aerogel.

According to an embodiment, the rigid portion may include mica.

According to an embodiment, the restraining member may be formed in a cylindrical shape.

According to an embodiment, an elastic modulus of the rigid portion may be higher than an elastic modulus of the buffer portion. When the module housing expands, a rate of change in a first thickness of the rigid portion may be smaller than a rate of change in a second thickness of the buffer portion.

According to an aspect of the present disclosure, a battery module may include: a cell assembly including a plurality of battery cells; a module housing including an accommodation portion accommodating the cell assembly and a module cover covering the cell assembly; and a restraining member connected to the module housing. The restraining member may include a rigid portion connected to the module cover and a buffer portion connected to the rigid portion.

According to an embodiment, the rigid portion may include a first surface facing the buffer portion, a second surface opposite to the first surface and facing the module housing, and a third surface surrounding at least a portion of the first surface and the second surface. The buffer portion may include a fourth surface facing the outside of the battery module, a fifth surface opposite to the fourth surface and having an accommodation recess for accommodating the rigid portion, and a sixth surface surrounding at least a portion between the fourth surface and the fifth surface.

According to an embodiment, the battery module may further include: a mica sheet surrounding at least a portion of the module housing and including a coupling hole accommodating the restraining member. The restraining member may be interference-fitted into the coupling hole, and the sixth surface of the buffer portion contacts an inner surface of the mica sheet defining the coupling hole.

According to an embodiment, the restraining member may include a fastening member inserted into the rigid portion. The restraining member may be coupled to the module housing using the fastening member.

According to another aspect of the present disclosure, a battery pack includes: a plurality of battery modules, each including a plurality of battery cells and a module housing accommodating the plurality of battery cells; a pack frame including a pack cover covering the plurality of battery modules and accommodating the plurality of battery modules; and a restraining member disposed between the plurality of battery modules and the pack cover. The restraining member may include a rigid portion connected to the pack cover and a buffer portion connected to the rigid portion and facing the module housing.

According to an embodiment, the pack cover may include an outer surface facing the outside of the battery pack and an inner surface facing the battery module, the restraining member may include a first fastening member coupled to the rigid portion and penetrating through the pack cover. The battery pack may include a second fastening member mounted on the outer surface of the pack cover and coupled to the first fastening member.

### Advantageous Effects of Invention

According to an embodiment of the present disclosure, thermal deformation of a battery module in a thermal runaway condition may be reduced.

According to an embodiment of the present disclosure, a flow path space between a battery pack and a battery module through which gases, flames, and/or conductive particles may flow may be maintained, and smooth exhaust may be induced.

According to an embodiment of the present disclosure, thermal runaway and heat propagation between battery modules may be delayed.

According to an embodiment of the present disclosure, assembly may be improved by reducing stress applied to a battery module and absorbing tolerances of the battery pack.

According to an embodiment of the present disclosure, noise and vibration caused by interference between a restraining member and a battery pack may be reduced.

### Brief Description of Drawings

FIG. 1 is a perspective view of a battery cell according to an embodiment.
FIG. 2 is a perspective view of a battery module according to an embodiment.
FIG. 3 is an exploded perspective view of a battery module according to an embodiment.
FIG. 4 is an exploded perspective view of a battery pack according to an embodiment.
FIG. 5 is a side schematic view of a battery pack according to an embodiment.
FIG. 6 is a perspective view of a restraining member according to an embodiment.
FIG. 7 is an exploded perspective view of a restraining member including an adhesive layer according to an embodiment.
FIG. 8 is a perspective view of a battery module including a mica sheet, according to an embodiment.
FIG. 9 is a cross-sectional view taken along line I-I' of FIG. 8, according to an embodiment.
FIG. 10 is an exploded perspective view of a restraining member of FIG. 9, according to an embodiment.
FIG. 11 is a cross-sectional view taken along line I-I' of FIG. 8, according to an embodiment.
FIG. 12 is an exploded perspective view of a restraining member of FIG. 11, according to an embodiment.
FIG. 13 is a perspective view of a battery module including a flame propagation prevention sheet, according to another embodiment.
FIG. 14 is a side schematic view of a battery pack, according to another embodiment.
FIG. 15 is a schematic view of a restraining member coupled to a pack cover of FIG. 14.
FIG. 16 is a schematic view of a vehicle, according to an embodiment.

### Best Mode for the Invention

The present disclosure will be described in detail with reference to the accompanying drawings. However, this is merely illustrative and the present disclosure is not limited to the specific embodiments described by way of example.

Terms and words used in the present specification and claims to be described below should not be construed as limited to ordinary or dictionary terms, and should be construed in accordance with the technical idea of the present disclosure based on the principle that the inventors may properly define their own disclosures in terms of terms in order to best explain the disclosure.

Therefore, the embodiments described in the present specification and the configurations illustrated in the drawings are merely the most preferred embodiments of the present disclosure and are not intended to represent all of the technical ideas of the present disclosure, and thus should be understood that various equivalents and modifications may be substituted at the time of the present application.

The detailed description of well-known functions and constructions which may obscure the gist of the present disclosure will be omitted. Some of the elements in the accompanying drawings are exaggerated, omitted, or schematically illustrated, and the size of each element does not entirely reflect the actual size.

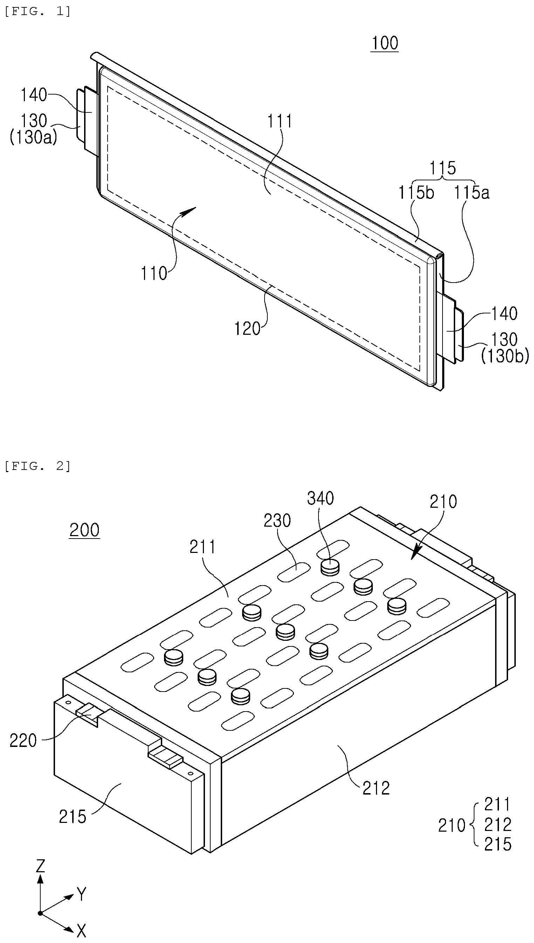

FIG. 1 is a perspective view of a battery cell according to an embodiment.

Referring to FIG. 1, a battery cell 100 may include a pouch 110, an electrode assembly 120, and an electrode tab 130. The battery cell 100 may be a secondary battery. For example, the battery cell 100 may be a lithium ion battery, but is not limited thereto. For example, the battery cell 100 may be a nickel-cadmium battery, a nickel-metal hydride battery, or a nickel-hydrogen battery which may be charged and discharged.

The pouch 110 may form at least a portion of the exterior of the battery cell 100. The pouch 110 may include an electrode accommodation portion 111 accommodating the electrode assembly 120 and a sealing portion 115 sealing at least a portion of the periphery of the electrode accommodation portion 111. The electrode accommodation portion 111 may provide a space for accommodating the electrode assembly 120 and an electrolyte.

The sealing portion 115 may be formed by coupling at least a portion of the periphery of the pouch 110. The sealing portion 115 may be formed in a flange shape extending outward from the electrode accommodation portion 111 formed in a container shape and may be disposed along at least a portion of an outer portion of the electrode accommodation portion 111. In an embodiment, the sealing portion 115 may include a first sealing portion 115a in which the electrode tab 130 is disposed and a second sealing portion 115b in which the electrode tab 130 is not disposed. A portion of the electrode tab 130 may be drawn out or exposed to the outside of the pouch 110. To increase the sealing of the first sealing portion 115a at the position at which the electrode tab 130 is drawn out and simultaneously ensure electrical insulation, the electrode tab 130 may be covered by an insulating film 140. The insulating film 140 may be formed of a film material thinner than the electrode tab 130 and may be attached to both sides of the electrode tab 130.

In an embodiment, the electrode tabs 130 may be disposed on opposite sides of the battery cell 100 in a longitudinal direction. For example, the electrode tab 130 may include a positive electrode tab 130a having a first polarity (e.g., positive electrode) facing one longitudinal side of the battery cell 100 and a negative electrode tab 130b having a second polarity (e.g., negative electrode) facing the other longitudinal side. In the embodiment illustrated in FIG. 1, the sealing portion 115 may include two first sealing portions 115a with electrode tabs 130 disposed thereon and one second sealing portion 115b without electrode tabs 130. The electrode tab 130 may be referred to as an electrode lead.

The direction of the electrode tabs 130 may be selectively designed. In an embodiment (e.g., FIG. 1), the electrode tabs 130 may include a positive electrode tab 130a and a negative electrode tab 130b disposed opposite to the positive electrode tab 130a with respect to the electrode assembly 120. While FIG. 1 illustrates the electrode tabs 130 disposed at both ends of the battery cell 100 in the longitudinal direction to face in opposite directions, but the structure of the electrode tabs 130 is not limited thereto. For example, the two electrode tabs 130 may be disposed substantially parallel in the longitudinal direction of the battery cell 100.

Meanwhile, the pouch 110 is not limited to a structure in which the sealing portions 115 are formed on three sides by folding a single sheet of exterior material as illustrated in FIG. 1.

In an embodiment of the present disclosure, at least a portion of the sealing portion 115 may be formed in a folded form at least once. By folding at least a portion of the sealing portion 115, the bonding reliability of the sealing portion 115 may be improved and the area of the sealing portion 115 may be minimized. According to an embodiment, among the sealing portions 115, the second sealing portion 115b, in which the electrode tab 130 is not disposed, may be folded twice and then secured with an adhesive (not shown). The angle and number of bends of the second sealing portion 115b may vary. For example, in an embodiment (not shown), the second sealing portion 115b may be folded at a 90° angle relative to the first sealing portion 115a.

The electrode assembly 120 may include a cathode plate, an anode plate, and a separator. The separator may prevent contact between the cathode plate and the anode plate. Those skilled in the art will appreciate that the electrode assembly 120 may be manufactured using various methods. According to embodiments, the cathode, anode, and separator may be repeatedly disposed to form the electrode assembly. In some embodiments, the electrode assembly may be a winding type, a stacking type, a z-folding type, or a stack-folding type electrode assembly.

The structure of the battery cell 100 illustrated in FIG. 1 is an example. For example, in FIG. 1, the battery cell 100 is described as being a pouch-type battery cell, but the structure of the battery cell 100 is not limited thereto. For example, the battery cell 100 may be a cylindrical battery cell or a prismatic battery cell.

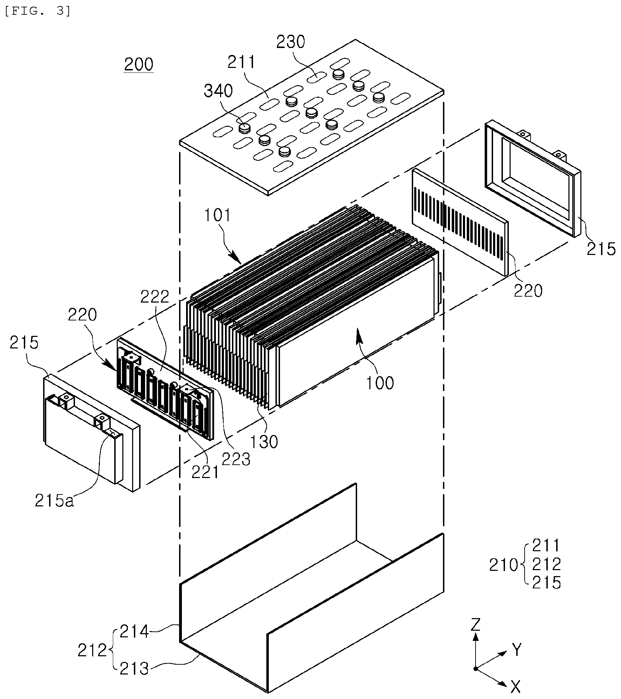

FIG. 2 is a perspective view of a battery module according to an embodiment. FIG. 3 is an exploded perspective view of the battery module according to an embodiment.

Referring to FIGS. 2 and 3, a battery module 200 may include a cell assembly 101 including a plurality of battery cells 100, a module housing 210, and a busbar assembly 220.

The module housing 210 forms at least a portion of the exterior of the battery module 200 and may form an internal space accommodating components of the battery module 200 (e.g., the cell assembly 101 and/or the busbar assembly 220) .

The module housing 210 may include an accommodation portion 212 surrounding the lower and side surfaces of the cell assembly 101. The accommodation portion 212 may include a main plate 213 covering the lower surface of the cell assembly and a plurality of sidewall members 214 covering at least a portion of the side surface of the cell assembly 101. In an embodiment, the main plate 213 and the sidewall members 214 may be formed integrally.

The module housing 210 may include an end plate 215 covering a portion of the side surface of the cell assembly. In an embodiment, the end plate 215 may be connected to a longitudinal (e.g., Y-axis direction) end of the accommodation portion 212. The end plate 215 may cover a portion of the side surface of the cell assembly 101 and at least a portion of the busbar assembly 220. The end plate 215 may include a hole 215a for accommodating a terminal busbar 223 of the busbar assembly 2200.

In an embodiment, the module housing 210 may be formed of a material having high thermal conductivity, such as metal. For example, the module housing 210 may be formed of aluminum and/or stainless steel. However, the material of the module housing 210 is not limited thereto. In another embodiment, the module housing 210 may be formed of a polymer. In an embodiment, the module housing 210 may be referred to as a module case.

The busbar assembly 220 may include an electrically conductive busbar 221 electrically connected to an electrode tab (e.g., the electrode tab 130 of FIG. 1) of the battery cell 100 and a busbar frame 222 supporting the busbar. The busbar assembly 220 may include at least one connection terminal for electrical connection to the outside. The electrode tab 130 of the battery cell 100 may be electrically connected to the outside of the battery module 200 via the busbars 221 and connection terminals.

A module cover 211 may form at least a portion of the exterior of the battery module 200 together with the module housing 210. For example, the module cover 211 may be connected to the module housing 210 and surround at least a portion of the cell assembly. The module cover 211 may be disposed on one side of the cell assembly and cover the cell assembly. A specific structure of the module cover 211 is further described below.

The busbar assembly 220 may include the electrically conductive internal busbar 221 electrically connected to the electrode tabs 130 of the battery cell 100 and the busbar frame 222 supporting the internal busbar 221. The busbar frame 222 may be referred to as a support plate or frame. The busbar frame 222 may be formed of an electrically insulating material (e.g., a polymer). At least a portion of the busbar frame 222 may be disposed between the cell assembly 101 and the internal busbar 221 to support the internal busbar 221. In an embodiment, the internal busbar 221 may be referred to as a busbar.

The busbar assembly 220 may include at least one terminal busbar 223 for electrical connection to the outside of the battery module 200. The electrode tab 130 of the battery cell 100 may be electrically connected to the outside of the battery module 200 via the internal busbar 221 and the terminal busbar 223. For example, the terminal busbar 223 may be electrically connected to the internal busbar 221, and current from the battery cell 100 may be transmitted to the outside of the battery module 200 through the internal busbar 221 and the terminal busbar 223. The terminal busbar 223 may be exposed to the outside of the module housing 210 through the hole 215a of the end plate 215.

The battery module 200 may include a venting hole 230. The venting hole 230 may provide a path for flames, gases, and/or conductive particles occurring in the battery cells 100 to be emitted to the outside of the battery module 200. As the flames, gases, and/or conductive particles are emitted to the outside of the battery module 200 through the venting hole 230, a pressure increase inside the battery module 200 may be reduced, and heat propagation between the battery cells 100 may be delayed. The venting hole 230 may communicate with an accommodation space S formed by the module housing 210. For example, the venting hole 230 may be a path for discharging gas inside the accommodation space S to the outside of the module housing 210. The venting hole 230 may be a through-hole formed in the module cover 211. A plurality of venting holes 230 may be provided. In another example, the venting hole 230 may be a notch formed in the module cover 211.

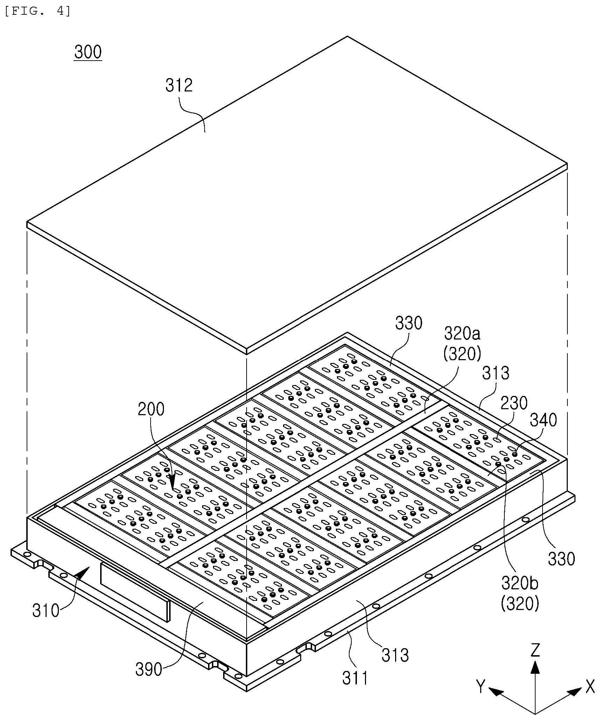

In an embodiment, the battery module 200 may include the restraining member 340. The restraining member 340 may be mounted on the module housing 210 (e.g., the module cover 211). The restraining member 340 may be disposed to protrude from an outer surface of the module cover 211 toward the outside of the battery module 200. In another embodiment, the restraining member 340 may be a component of a battery pack (e.g., the battery pack 300 of FIG. 4). For example, the restraining member 340 may be included in the battery pack 300. The restraining member 340 is further described below.

For convenience of description, some components are omitted or exaggerated in this document. For example, the number of battery cells 100, the shape of the busbar assembly 220, the number and shape of the venting holes 230, and/or the number of restraining members 340 may be selectively designed. In an embodiment (not shown), the battery module 200 may include a conductive member (e.g., a long busbar) for adjusting the position of the connection terminals of the busbar assembly 220.

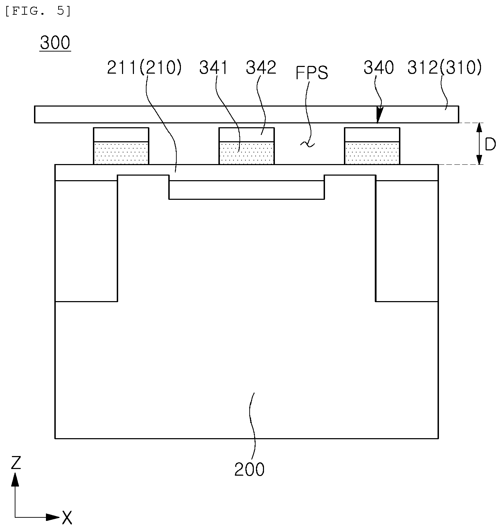

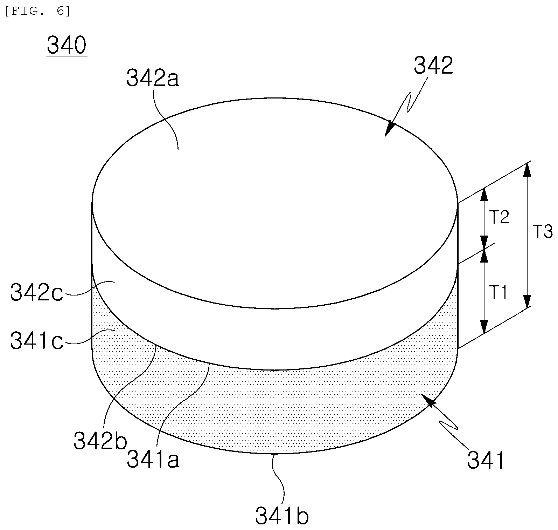

FIG. 4 is an exploded perspective view of a battery pack according to an embodiment. FIG. 5 is a side schematic diagram of a battery pack according to an embodiment. FIG. 6 is a perspective view of a restraining member according to an embodiment.

Referring to FIGS. 4, 5, and/or 6, the battery pack 300 may include a plurality of battery modules 200, a pack frame 310, and the restraining member 340. The description of the battery module 200 and venting hole 230 of FIGS. 2 and/or 3 may be applied to the battery module 200 and venting hole 230 of FIGS. 4 and 5.

The battery pack 300 may include a plurality of battery modules 200 and the pack frame 310 accommodating the plurality of battery modules 200.

The pack frame 310 may accommodate components ( e.g., the battery module 200) of the battery pack 300. The pack frame 310 may include a bottom member 311 supporting the battery module 200, a pack cover 312 covering the battery module 200, and a pack sidewall 313 surrounding at least a portion of the bottom member 311 and the pack cover 312. The bottom member 311 may support an accommodation portion (e.g., the accommodation portion 212 of FIG. 2) of the battery module 200.

The pack frame 310 may include a partition wall 320 traversing at least some of the plurality of battery modules 200. For example, an accommodation space of the pack frame 310 may be divided into a plurality of spaces by the partition wall 320. The partition wall 320 may be installed across an internal space of the battery pack 300 to reinforce the rigidity of the pack frame 310. In an embodiment, the partition wall 320 may include a first partition wall 320a traversing the plurality of battery cells 100 and a plurality of second partition walls 320b substantially perpendicular to the first partition wall 320a.

In an embodiment, the battery pack 300 may include a duct member 330. The duct member 330 may include an exhaust space to provide a path for gases and/or flames emitted from the battery module 200. The duct member 330 may be disposed within the pack frame 310. The duct member 330 may surround at least a portion of the battery module 200. For example, gases and/or flames occurring in the battery cells (e.g., battery cells 100 of FIG. 1 ) of the battery module 200 may pass through the exhaust space of the duct member 330 to the outside of the battery pack 300. In the present disclosure, the duct member 330 may be referred to as an exhaust duct or exhaust member.

The restraining member 340 may maintain the position of the battery module 200 so that the battery module 200 is spaced apart from the module housing (e.g., the module cover 211) and the pack frame 310 (e.g., the pack cover 312). The restraining member 340 may restrict the position of the battery module 200 so that the battery module 200 remains within a specified position range. For example, the battery pack 300 may include a flow path space FPS located between the battery module 200 and the pack cover 312. The flow path space FPS may provide a path for gases, flames, and/or conductive particles emitted from the battery module 200 to flow. Gases, flames, and/or conductive particles occurring within the battery module 200 may flow through the venting hole 230 and the flow path space FPS.

The restraining member 340 may prevent or inhibit closure of the flow path space FPS. The flow path space FPS may be an empty space located between the pack cover 312 and the module cover 211. In an embodiment, when expansion or swelling occurs in a cell assembly (e.g., the cell assembly 101 of FIG. 3) located inside the battery module 200, the battery module 200 may be deformed (e.g., thermally deformed). For example, an outer surface of a module cover 211 of the battery module 200 may expand and come into contact with an inner surface of the pack cover 312. When the outer surface of the module cover 211 comes into contact with the inner surface of the pack cover 312, the flow path space FPS may be closed and the pressure and temperature inside the battery pack 300 may rise above a specified level. Because the restraining member 340 prevents the flow path space FPS from being closed, the rate of increase in the pressure and temperature inside the battery pack 300 may be reduced, and heat propagation between adjacent battery modules 200 may be delayed. The restraining member 340 may be located within the flow path space FPS. For example, the restraining member 340 may be located between the pack cover 312 and the module cover 211.

The restraining member 340 may include a rigid portion 341 connected to the battery module 200. For example, the rigid portion 341 may be connected to the module cover 211. The rigid portion 341 may reduce volume expansion due to thermal deformation of the battery module 200, thereby maintaining the flow path space FPS of the battery pack 300.

The rigid portion 341 may be manufactured from a material having heat resistance, insulation properties, and compressive strength greater than or equal to a specified value. For example, the rigid portion 341 may include mica.

The restraining member 340 may include a buffer portion 342 configured to reduce impact due to contact between the battery pack 300 and the restraining member 340. The buffer portion 342 may face the pack cover 312. For example, the buffer portion 342 may be in contact with the pack cover 312. The buffer portion 342 may be deformed based on the impact caused by contact with the pack cover 312. As the buffer portion 342 is deformed, the buffer portion 342 may reduce noise and/or vibration caused by contact between the restraining member 340 and the pack cover 312. As the buffer portion 342 is deformed, the buffer portion 342 may absorb dimensional deformation of the battery module 200 and tolerances of components. The buffer portion 342 may increase the manufacturing convenience of the battery module 200 and/or the battery pack 300. The buffer portion 342 may be formed of an elastic material. For example, the buffer portion 342 may include at least one of silicone, polyurethane, and aerogel. The buffer portion 342 may be disposed closer to the pack cover 312 of the pack frame 310 of the battery pack 300 than the rigid portion 341.

In an embodiment, the restraining member 340 may be formed in a cylindrical shape. For example, the restraining member 340 may have a circular cross-sectional area relative to the direction (e.g., the X-axis direction) in which the pack cover 312 extends. By forming the restraining member 340 to have a cylindrical shape, resistance to gases, flames, and/or conductive particles emitted from the battery module 200 may be reduced, and the flowability of the venting gas may be improved. In another embodiment, the restraining member 340 may be formed to have a shape of an elliptical column or a column with a polygonal cross-section.

The rigid portion 341 may be formed to have a substantially cylindrical shape. For example, the rigid portion 341 may include a first surface 341a facing the buffer portion 342, a second surface 341b opposite to the first surface 341a and facing the battery module 200, and a third surface 341c surrounding at least a portion between the first surface 341a and the second surface 341b. In an embodiment, the first surface 341a, the second surface 341b, and the third surface 341c may be referred to as a first front surface, a first rear surface, and a first side surface, respectively.

The buffer portion 342 may be formed to have a substantially cylindrical shape. For example, the buffer portion 342 may include a fourth surface 342a facing the pack cover 312, a fifth surface 342b opposite to the fourth surface 342a and facing the rigid portion 341, and a sixth surface 342c surrounding at least a portion between the fourth surface 342a and the fifth surface 342b. In an embodiment, the fourth surface 342a, the fifth surface 342b, and the sixth surface 342c may be referred to as a second front surface, a second rear surface, and a second side surface, respectively.

The restraining member 340 may maintain a distance D between the battery module 200 and the pack cover 312 to a specified size or greater. For example, when the restraining member 340 is in contact with the pack cover 312, the sum of a first thickness T1 of the rigid portion 341 and a second length T3 of the buffer portion 342 (e.g., a total thickness T3 of the restraining member 340) may be substantially equal to the distance D between the battery module 200 and the pack cover 312. In the present disclosure, the rigid portion 341 may refer to a material having an elastic modulus higher than the elastic modulus of a substantial rigid portion or buffer portion 342. For example, the elastic modulus of the buffer portion 342 may be lower than the elastic modulus of the rigid portion 341. As the module housing 210 of the battery module 200 expands, the ratio of the first thickness T1 to the second thickness T2 of the rigid portion 341 may increase. The length ratio of the rigid portion 341 to the buffer portion 342 may be selectively designed based on the distance D between the pack cover 312 and the battery module 200. For example, when the module housing 210 expands, the rate of change in the first thickness T1 of the rigid portion 341 may be less than the rate of change in the second thickness T2 of the buffer portion 342.

The battery pack 300 may include a battery controller 390 for controlling the battery module 200. The battery controller 390 may be disposed within the pack frame 310. The battery controller 390 may include a battery management system (BMS). The configuration of the battery controller 390 is well known in various forms, so a detailed description will be omitted. In an embodiment, the battery controller 390 may be referred to as a processor.

The structure of the battery pack 300 of FIG. 3 is an example. For example, the number of battery modules 200 included in the battery pack 300, the number of venting holes 230, the number of restraining members 340, the shape of the pack frame 310, and/or the structure of the duct member 330 may be selectively designed.

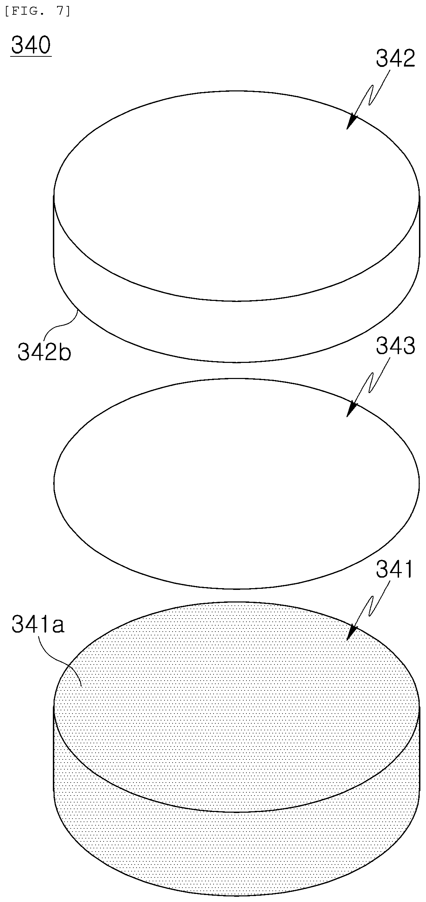

FIG. 7 is an exploded perspective view of a restraining member including an adhesive layer, according to an embodiment.

Referring to FIG. 7, the restraining member 340 may include the rigid portion 341, the buffer portion 342, and an adhesive layer 343. The description of the restraining member 340 of FIGS. 4, 5, and/or 6 may be applied to the restraining member 340 of FIG. 7.

The adhesive layer 343 may connect the rigid portion 341 and the buffer portion 342. For example, the adhesive layer 343 may be disposed between the rigid portion 341 and the buffer portion 342. The adhesive layer 343 may couple the first surface 341a of the rigid portion 341 to the fifth surface 342b of the buffer portion 342.

The adhesive layer 343 may include an adhesive material. For example, the adhesive layer 343 may include a hot melt or a double-sided tape. The material of the adhesive layer 343 is an example. For example, the adhesive layer 343 may include an adhesive having a specified peel strength (e.g., 0.07 kgf/mm) or greater. In an embodiment, the adhesive layer 343 may be a hot melt adhesive having a peel strength of substantially 0.13 kgf/mm.

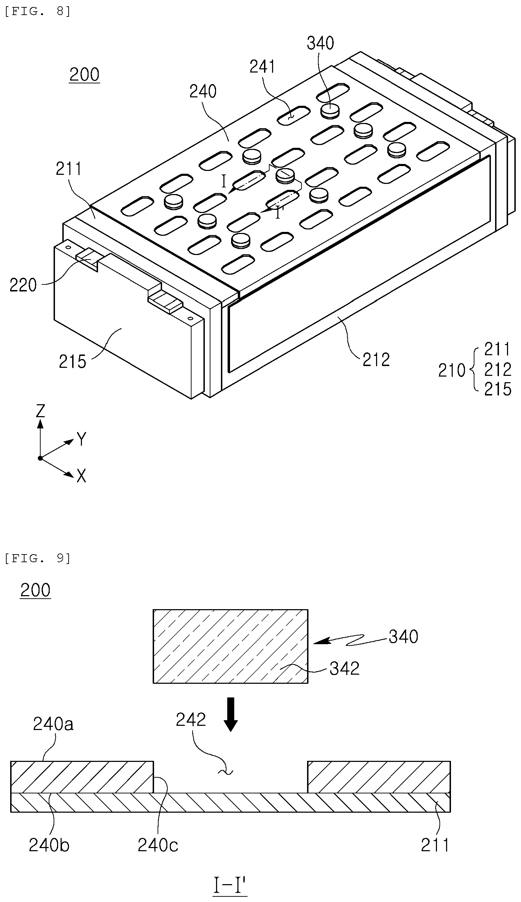

FIG. 8 is a perspective view of a battery module including a mica sheet, according to an embodiment.

Referring to FIG. 8, the battery module 200 may include the module housing 210 and a mica sheet 240 surrounding at least a portion of the module housing 210. The restraining member 340 may be mounted on the battery module 200. At least a portion of the descriptions of the battery module 200, the module housing 210, and the restraining member 340 of FIG. 2 may be applied to the battery module 200, the module housing 210, and the restraining member 340 of FIG. 8. For convenience of description, the busbar assembly 220 is shown excluded from FIG. 8.

The mica sheet 240 may surround at least a portion of the module housing 210. For example, the mica sheet 240 may cover at least a portion of the module cover 211 and at least a portion of the accommodation portion 212 (e.g., a portion of the sidewall member 214 of FIG. 3). The mica sheet 240 may be coupled to the module cover 211 using an adhesive or a bonding component.

The mica sheet 240 may prevent or delay flame propagation. For example, the mica sheet 240 may be formed of mica having insulating and heat-resistant properties. The mica sheet 240 may prevent internal short circuits resulting from contact between the module housing 210 and the pack frame 310. The mica sheet 240 may protect the module housing 210 and components within the module housing 210 from flames, gases, and/or conductive particles transmitted from the outside of the battery module 200.

The mica sheet 240 may include exhaust holes 241 corresponding to the venting holes (e.g., the venting holes 230 of FIG. 2) formed in the module cover 211. A plurality of exhaust holes 241 may be provided. The exhaust holes 241 may be through-holes formed in the mica sheet 240. Flames, gases, and/or conductive particles occurring in a battery cell (e.g., the battery cell 100 of FIG. 3) may be emitted to the outside of the battery module 200 through the venting holes 230 and exhaust holes 241.

The restraining member 340 may be coupled to the mica sheet 240 and/or the module housing 210. The structure in which the restraining member 340 is coupled to the mica sheet 240 and/or the module housing 210 (e.g., the module cover 211) is further described below.

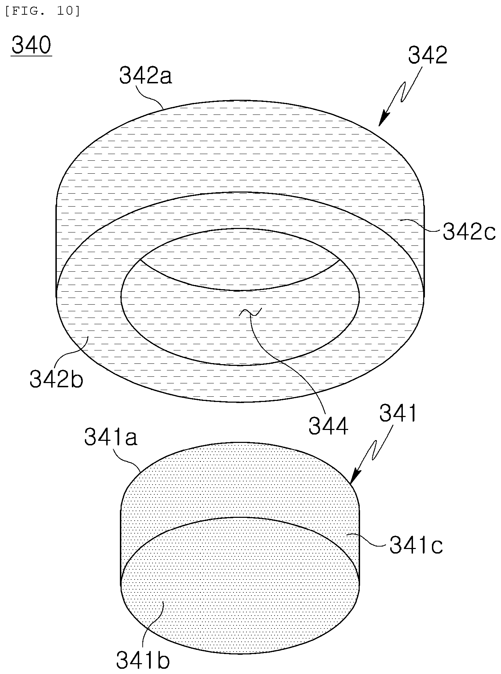

FIG. 9 is a cross-sectional view taken along line I-I' of FIG. 8, according to an embodiment. FIG. 10 is a perspective view of the restraining member of FIG. 9, according to an embodiment.

Referring to FIGS. 9 and 10, the battery module 200 may include the module cover 211, the mica sheet 240, and the restraining member 340 including the rigid portion 341 and the buffer portion 342. At least a portion of the descriptions of the battery module 200, the module cover 211, the mica sheet 240, and the restraining member 340 of FIGS. 6 and 8 may be applied to the battery module 200, the module cover 211, the mica sheet 240, and the restraining member 340 of FIGS. 9 and/or 10 .

The restraining member 340 may include the rigid portion 341 and the buffer portion 342.

In an embodiment, the rigid portion 341 may be formed to be smaller than the buffer portion 342. For example, the size of the rigid portion 341 (e.g., the diameter of the first surface 341a or the second surface 341b) may be smaller than the size (e.g., the diameter of the fourth surface 342a or the fifth surface 342b) of the buffer portion 342.

The buffer portion 342 may include an accommodation recess 344 for accommodating the rigid portion 341.

The accommodation recess 344 may be formed on the fifth surface 342b of the buffer portion 342. The rigid portion 341 may be inserted (e.g., interference fit) into the accommodation recess 344 of the buffer portion 342 and coupled with the buffer portion 342. When the rigid portion 341 is inserted into the buffer portion 342, the buffer portion 342 may cover the first surface 341a and the third surface 341c of the rigid portion 341. The rigid portion 341 may be coupled to the buffer portion 342 using frictional force. In an embodiment, the restraining member 340 may include an adhesive (e.g., the adhesive layer 343 of FIG. 7) disposed between the rigid portion 341 and the buffer portion 342 within the accommodation recess 344. The mica sheet 240 may include a front surface 240a facing the outside of the battery module 200, a rear surface 240b opposite to the front surface 240a and facing the module cover 211, and an inner surface 240c disposed between the front surface 240a and the rear surface 240b.

The mica sheet 240 may include a coupling hole 242 for accommodating at least a portion of the restraining member 340. The coupling hole 242 may be a through-hole extending from the front surface 240a to the rear surface 240b of the mica sheet 240. The coupling hole 242 may be surrounded by the inner surface 240c of the mica sheet 240. A plurality of coupling holes 242 may be provided. For example, the number of coupling holes 242 may be equal to the number of restraining members 340.

The restraining member 340 may be coupled to a portion (e.g., the mica sheet 240) of the battery module 200 using frictional force. For example, at least a portion of the buffer portion 342 of the restraining member 340 may be inserted into the coupling hole 242 of the mica sheet 240. For example, the second surface 341b of the rigid portion 341 and the fifth surface 342b of the buffer portion 342 may contact the module cover 211, and the sixth surface 342c of the buffer portion 342 may contact the inner surface 240c of the mica sheet 240. As the buffer portion 342 is interference fitted to the coupling hole 242 of the buffer portion 342, the restraining member 340 may be coupled to the mica sheet 240 and/or the module cover 211.

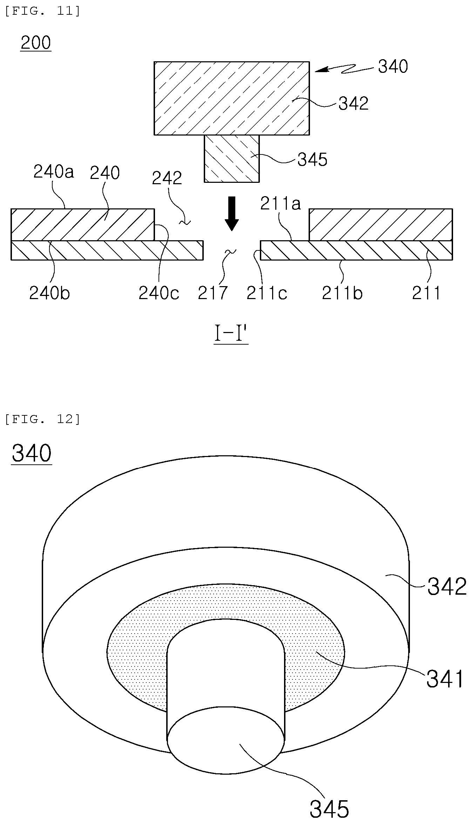

FIG. 11 is a cross-sectional view taken along line I-I' of FIG. 8, according to an embodiment. FIG. 12 is a perspective view of the restraining member of FIG. 11, according to an embodiment.

Referring to FIGS. 11 and 12, the battery module 200 may include the module cover 211, the mica sheet 240, and the restraining member 340 including the rigid portion 341 and the buffer portion 342. At least a portion of the descriptions of the battery module 200, the module cover 211, the mica sheet 240, the restraining member 340, the rigid portion 341, and the buffer portion 342 of FIGS. 6, 8, 9, and/or 10 may be applied to the battery module 200, the module cover 211, the mica sheet 240, the restraining member 340, the rigid portion 341, and the buffer portion 342 of FIGS. 11 and/or 12.

The battery module 200 may include a fastening member 345 for coupling the fastening member 340 to the module cover 211 and/or the mica sheet 240. In an embodiment, the fastening member 345 may be a bolt.

The fastening member 345 may be inserted into the rigid portion 341 of the restraining member 340. For example, the rigid portion 341 may include a hole for accommodating the fastening member 345. One end of the fastening member 345 may be coupled to the rigid portion 341, and the other end of the fastening member 345 may be coupled to the module cover 211. The bonding strength between the restraining member 340 and the module cover 211 may be increased by the fastening member 345.

The module cover 211 may include a fastening hole 217 for accommodating at least a portion of the fastening member 345. The fastening hole 217 may be a through-hole extending from a front surface 211a of the module cover 211 to the rear surface 211b of the module cover 211. The fastening hole 217 may be surrounded by an inner surface 211c of the module cover 211. The front surface 211a of the module cover 211 may face the rear surface 240b of the mica sheet 240.

The fastening hole 217 of the module cover 211 may face at least a portion of the coupling hole 242 of the mica sheet 240. For example, the fastening hole 217 may overlap at least a portion of the coupling hole 242. At least a portion of the fastening member 345 may pass through the coupling hole 242 of the mica sheet 240 and be inserted into the fastening hole 217 of the module cover 211.

The restraining member 340 may be secured to the module cover 211 and the mica sheet 240. For example, the second surface 341b of the rigid portion 341 may face the front surface 211a of the module housing (e.g., the module cover 211). The fifth surface 342b of the buffer portion 342 may face the front surface 211a of the module cover 211, and the sixth surface 342c of the buffer portion 342 may face the inner surface 240c of the mica sheet 240. At least a portion of the fastening member 345 may face the inner surface 211c of the module cover 211.

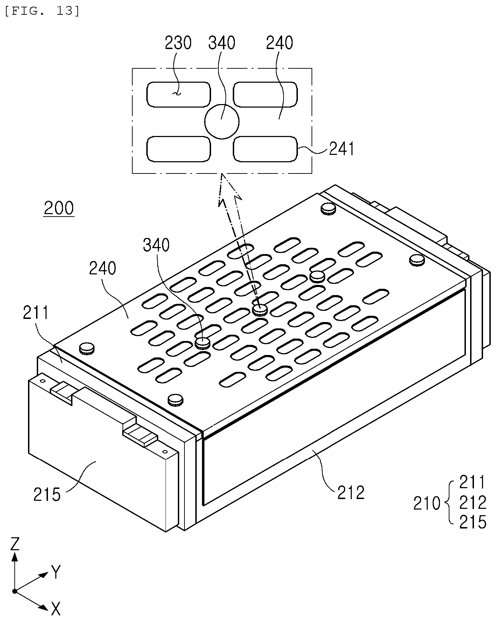

FIG. 13 is a perspective view of a battery module including a flame propagation prevention sheet according to another embodiment.

Referring to FIG. 13, the battery module 200 may include the module housing 210 and the mica sheet 240 surrounding at least a portion of the module housing 210. The restraining member 340 may be mounted on the module cover 211 and/or the mica sheet 240 of the battery module 200.

At least a portion of the descriptions of the battery module 200, the module housing 210, and the restraining member 340 of FIGS. 2, 8, 9, 10, 11, and/or 12 may be mounted on the battery module 200, the module housing 210, and the restraining member 340 of FIG. 13. For convenience of description, the busbar assembly 220 is shown excluded in FIG. 13.

The restraining member 340 may optionally be disposed on the module housing 210. For example, the position and/or number of restraining members 340 installed on the module housing 210 may be optionally designed. For example, in an embodiment, the restraining member 340 may be provided as a plurality of restraining members 340. The plurality of restraining members 340 may include two restraining members 340 disposed at the front of the module housing 210, three restraining members 340 disposed at the center of the module housing 210, and two restraining members 340 disposed at the rear of the module housing 210.

The restraining member 340 may be disposed not to overlap the venting hole 230 and the exhaust hole 241. For example, when viewed from above the battery module 200, the restraining member 340 may not overlap the venting hole 230 and the exhaust hole 241. Since the restraining member 340 does not overlap the venting holes 230 and the exhaust hole 241, interference of the restraining members 340 with gases, flames, and/or conductive particles emitted from the battery module 200 may be reduced.

The area of the restraining member 340 may be designed based on the area of the venting hole 230. For example, the sum of the cross-sectional areas of the restraining members 340 may be less than the sum of the cross-sectional areas of the venting holes 230. The cross-sectional area of the restraining member 340 and the cross-sectional area of the venting hole 230 may be a cross-sectional area on a plane (X-Y plane) along which the module cover 211 extends. In an embodiment, the sum of the cross-sectional areas of the plurality of restraining members 340 may be at least 10% of the sum of the cross-sectional areas of the plurality of venting holes 230. For example, the sum of the cross-sectional areas of the plurality of restraining members 340 may be approximately 13% of the sum of the cross-sectional areas of the plurality of venting holes 230.

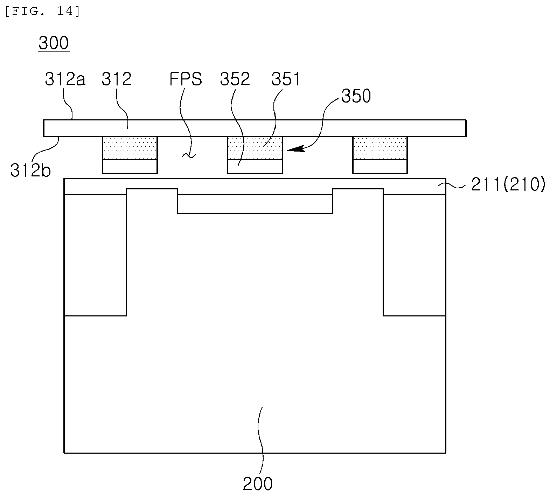

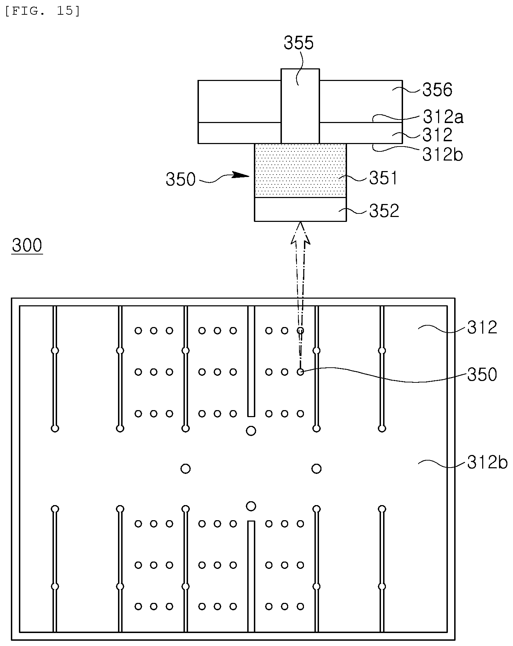

FIG. 14 is a side schematic diagram of a battery pack according to another embodiment. FIG. 15 is a schematic diagram of a restraining member coupled to the pack cover of FIG. 14.

Referring to FIGS. 14 and 15, the battery pack 300 may include the battery module 200, the pack cover 312, and a restraining member 350 including the rigid portion 351 and the buffer portion 352.

At least a portion of the descriptions of the battery module 200, the battery pack 300, the pack cover 312, the restraining member 340, the rigid portion 341, and the buffer portion 352 in FIGS. 2 through 12 may be applied to the battery module 200, the battery pack 300, the pack cover 312, the restraining member 350, the rigid portion 351, and the buffer portion 352 in FIGS. 14 and 15 .

The restraining member 350 may separate the battery module 200 from the pack cover 312. For example, the restraining member 350 may prevent closure of the flow path space FPS.

The restraining member 350 may be mounted on the pack cover 312. For example, the restraining member 350 may include the rigid portion 351 facing the pack cover 312 and a first fastening member 355 connected to the rigid portion 351. The first fastening member 355 may be coupled to the pack cover 312. In an embodiment, the battery pack 300 may include a second fastening member 356 to prevent the restraining member 350 from detaching from the pack cover 312. The second fastening member 356 may surround at least a portion of the first fastening member 355 and be coupled to the first fastening member 355. In an embodiment, the first fastening member 355 may be a bolt, and the second fastening member 356 may be a nut.

The pack cover 312 may include an outer surface 312a facing the outside of the battery pack 300 and an inner surface 312b facing the battery module 200. The restraining member 350 may be mounted on the inner surface 312b of the pack cover 312. For example, the first fastening member 355 may penetrate through the inner surface 312b and the outer surface 312a of the pack cover 312. The rigid portion 351 may be mounted on the inner surface 312b of the pack cover 312, and the second fastening member 356 may be mounted on the outer surface 312a of the pack cover 312. The pack cover 312 may be located between the second fastening member 356 and the rigid portion 351.

The buffer portion 352 may reduce impact caused by contact between the battery module 200 (e.g., the module cover 211 of FIG. 2) and the restraining member 350. The buffer portion 352 may be deformed based on the impact caused by contact with the battery module 200. As the buffer portion 352 is deformed, the buffer portion 352 may reduce noise and/or vibration occurring due to contact between the restraining member 350 and the battery module 200. As the buffer portion 352 is deformed, the buffer portion 352 may absorb dimensional deformation of the battery module 200 and component tolerances. Due to the buffer portion 352, the manufacturing convenience of the battery module 200 and/or battery pack 300 may be increased. The buffer portion 352 may be located closer to the module cover 211 of the battery module 200 than the rigid portion 351.

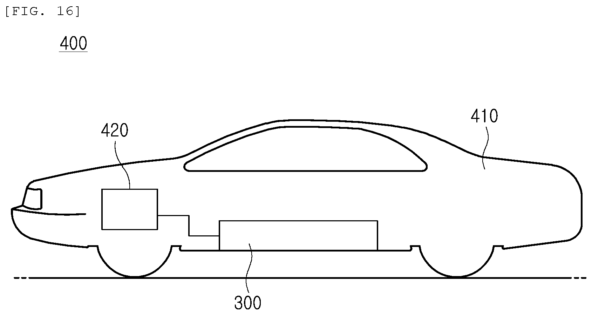

FIG. 16 is a schematic diagram of a vehicle according to an embodiment.

Referring to FIG. 16, a vehicle 400 may include a vehicle body 410, a motor 420, and the battery pack 300. The description of the battery pack 300 described above in this disclosure may be applied to the battery pack 300 of FIG. 16. For example, the battery pack 300 may include the restraining members 340 and 350 described above.

The vehicle 400 may be driven by the battery pack 300. For example, the vehicle 400 may be an electric vehicle or a hybrid vehicle. The vehicle 400 may include the motor 420. The motor 420 may be operated by current supplied from the battery pack 300. For example, the motor 420 may be operated based on current supplied from the battery pack 300.

The vehicle 400 may include the vehicle body 410 forming at least a portion of the exterior of the vehicle 400 and accommodating a plurality of components (e.g., the battery pack 300 and the motor 420). The vehicle body 410 may be referred to as a body. In an embodiment, a pack housing (e.g., the pack frame 310 of FIG. 4 ) of the battery pack 300 may be mounted on the vehicle body 410. For example, a bottom member (e.g., the bottom member 311 of FIG. 4) of the pack frame 310 may be mounted to the vehicle body 410 using a separate fastening component.

The battery pack 300 may supply current to components of the vehicle 400. For example, the battery pack 300 may supply current for the operation of the motor 420 and/or components not shown (e.g., electrical components).

The contents described above are merely examples of applying the principles of the present disclosure, and other components may be further included without departing from the scope of the present disclosure.

While the embodiments of the present disclosure have been described above, the scope of the present disclosure is not limited thereto, and it will be apparent to those skilled in the art that various modifications and variations may be made within the scope of the technical spirit of the present disclosure as defined in the claims. For example, the present disclosure may be implemented by deleting some components from the aforementioned embodiments and the embodiments may be implemented in combination with each other.

An aspect 1) A battery pack may include: a plurality of battery modules, each including a plurality of battery cells and a module housing accommodating the plurality of battery cells; a pack frame including a pack cover covering the plurality of battery modules and accommodating the plurality of battery modules; and a restraining member disposed between the plurality of battery modules and the pack cover, wherein the restraining member includes a rigid portion connected to the plurality of battery modules and a buffer portion connected to the rigid portion and facing the pack cover.

Aspect 2) In aspect 1, the module housing may include a module cover covering the plurality of battery cells and including a plurality of venting holes, the battery pack may further include a flow path space located between the module cover and the pack cover and configured to allow gas occurring in the plurality of battery cells to flow, and the restraining member may be located within the flow path space.

Aspect 3) In aspect 1 or aspect 2, the restraining member may be located so as not to overlap the plurality of venting holes.

Aspect 4) In aspect 1 to aspect 3, a cross-sectional area of the restraining member may be smaller than a sum of cross-sectional areas of the plurality of venting holes.

Aspect 5) In any one of aspect 1 to aspect 4, the restraining member may include an adhesive layer located between the rigid portion and the buffer portion.

Aspect 6) In any one of aspect 1 to aspect 5, each of the plurality of battery modules may include a mica sheet surrounding at least a portion of the module housing.

Aspect 7) In aspect 6, the rigid portion may include a first surface facing the buffer portion, a second surface opposite to the first surface and facing the module housing, and a third surface surrounding at least a portion of the first surface and the second surface, the buffer portion may include a fourth surface facing the battery pack, a fifth surface opposite to the fourth surface and having an accommodation recess accommodating the rigid portion, and a sixth surface surrounding at least a portion between the fourth surface and the fifth surface, and the buffer portion may cover the first surface and the third surface of the rigid portion.

Aspect 8) In aspect 7, the mica sheet may include a coupling hole accommodating the restraining member, and the restraining member may be interference-fitted into the coupling hole, and the sixth surface of the buffer portion may contact an inner surface of the mica sheet defining the coupling hole.

Aspect 9) In aspect 7 or aspect 8, the restraining member may include a fastening member inserted into the rigid portion, and the restraining member may be coupled to the module housing using the fastening member.

Aspect 10) In aspect 9, the module housing may include a module cover having a fastening hole for accommodating at least a portion of the fastening member, and the second surface of the rigid portion and the fifth surface of the buffer portion may be disposed on the module cover.

Aspect 11) In any one of aspect 1 to aspect 10, the buffer portion may include at least one of silicone, polyurethane, and aerogel.

Aspect 12) In any one of aspect 1 to aspect 11, the rigid portion may include mica.

Aspect 13) In any one of aspect 1 to aspect 12, the restraining member may be formed in a cylindrical shape.

Aspect 14) In any one of aspect 1 to aspect 13, an elastic modulus of the rigid portion may be higher than an elastic modulus of the buffer portion, and when the module housing expands, a rate of change in a first thickness of the rigid portion may be smaller than a rate of change in a second thickness of the buffer portion.

Aspect 15) A battery module may include: a cell assembly including a plurality of battery cells; a module housing including an accommodation portion accommodating the cell assembly and a module cover covering the cell assembly; and a restraining member connected to the module housing, wherein the restraining member may include a rigid portion connected to the module cover and a buffer portion connected to the rigid portion.

Aspect 16) In aspect 15, the rigid portion may include a first surface facing the buffer portion, a second surface opposite to the first surface and facing the module housing, and a third surface surrounding at least a portion of the first surface and the second surface, and the buffer portion may include a fourth surface facing the outside of the battery module, a fifth surface opposite to the fourth surface and having an accommodation recess for accommodating the rigid portion, and a sixth surface surrounding at least a portion between the fourth surface and the fifth surface.

Aspect 17) In aspect 16, the battery module may further include: a mica sheet surrounding at least a portion of the module housing and including a coupling hole accommodating the restraining member, wherein the restraining member may be interference-fitted into the coupling hole, and the sixth surface of the buffer portion contacts an inner surface of the mica sheet defining the coupling hole.

Aspect 18) In any one of aspect 15 to aspect 17, the restraining member may include a fastening member inserted into the rigid portion, and the restraining member may be coupled to the module housing using the fastening member.

Aspect 19) A battery pack includes: a plurality of battery modules, each including a plurality of battery cells and a module housing accommodating the plurality of battery cells; a pack frame including a pack cover covering the plurality of battery modules and accommodating the plurality of battery modules; and a restraining member disposed between the plurality of battery modules and the pack cover, wherein the restraining member may include a rigid portion connected to the pack cover and a buffer portion connected to the rigid portion and facing the module housing.

Aspect 20) In aspect 19, the pack cover may include an outer surface facing the outside of the battery pack and an inner surface facing the battery module, the restraining member may include a first fastening member coupled to the rigid portion and penetrating through the pack cover, and the battery pack may include a second fastening member mounted on the outer surface of the pack cover and coupled to the first fastening member.

## Claims

1. A battery pack comprising:
a plurality of battery modules, each including a plurality of battery cells and a module housing accommodating the plurality of battery cells;
a pack frame including a pack cover covering the plurality of battery modules and accommodating the plurality of battery modules; and
a restraining member disposed between the plurality of battery modules and the pack cover,
wherein the restraining member includes a rigid portion connected to the plurality of battery modules and a buffer portion connected to the rigid portion and facing the pack cover.

2. The battery pack of claim 1, wherein
the module housing includes a module cover covering the plurality of battery cells and including a plurality of venting holes,
the battery pack further comprises a flow path space located between the module cover and the pack cover and configured to allow gas occurring in the plurality of battery cells to flow, and
the restraining member is located within the flow path space.

3. The battery pack of claim 2, wherein the restraining member is located so as not to overlap the plurality of venting holes.

4. The battery pack of claim 2, wherein a cross-sectional area of the restraining member is smaller than a sum of cross-sectional areas of the plurality of venting holes.

5. The battery pack of any one of claim 1 to claim 4, wherein the restraining member includes an adhesive layer located between the rigid portion and the buffer portion.

6. The battery pack of any one of claim 1 to claim 4, wherein each of the plurality of battery modules includes a mica sheet surrounding at least a portion of the module housing.

7. The battery pack of claim 6, wherein
the rigid portion includes a first surface facing the buffer portion, a second surface opposite to the first surface and facing the module housing, and a third surface surrounding at least a portion of the first surface and the second surface,
the buffer portion includes a fourth surface facing the battery pack, a fifth surface opposite to the fourth surface and having an accommodation recess accommodating the rigid portion, and a sixth surface surrounding at least a portion between the fourth surface and the fifth surface, and
the buffer portion covers the first surface and the third surface of the rigid portion.

8. The battery pack of claim 7, wherein
the mica sheet includes a coupling hole accommodating the restraining member, and
the restraining member is interference-fitted into the coupling hole, and the sixth surface of the buffer portion contacts an inner surface of the mica sheet defining the coupling hole.

9. The battery pack of claim 7, wherein the restraining member includes a fastening member inserted into the rigid portion, and the restraining member is coupled to the module housing using the fastening member.

10. The battery pack of claim 9, wherein
the module housing includes a module cover having a fastening hole for accommodating at least a portion of the fastening member, and
the second surface of the rigid portion and the fifth surface of the buffer portion are disposed on the module cover.

11. The battery pack of any one of claim 1 to claim 4, wherein the buffer portion includes at least one of silicone, polyurethane, and aerogel.

12. The battery pack of any one of claim 1 to claim 4, wherein the rigid portion includes mica.

13. The battery pack of any one of claim 1 to claim 4, wherein the restraining member is formed in a cylindrical shape.

14. The battery pack of any one of claim 1 to claim 4, wherein
an elastic modulus of the rigid portion is higher than an elastic modulus of the buffer portion, and
when the module housing expands, a rate of change in a first thickness of the rigid portion is smaller than a rate of change in a second thickness of the buffer portion.

15. A battery module comprising:
a cell assembly including a plurality of battery cells;
a module housing including an accommodation portion accommodating the cell assembly and a module cover covering the cell assembly; and
a restraining member connected to the module housing,
wherein the restraining member includes a rigid portion connected to the module cover and a buffer portion connected to the rigid portion.

16. The battery module of claim 15, wherein
the rigid portion includes a first surface facing the buffer portion, a second surface opposite to the first surface and facing the module housing, and a third surface surrounding at least a portion of the first surface and the second surface, and
the buffer portion includes a fourth surface facing the outside of the battery module, a fifth surface opposite to the fourth surface and having an accommodation recess for accommodating the rigid portion, and a sixth surface surrounding at least a portion between the fourth surface and the fifth surface.

17. The battery module of claim 16, further comprising
a mica sheet surrounding at least a portion of the module housing and including a coupling hole accommodating the restraining member,
wherein the restraining member is interference-fitted into the coupling hole, and the sixth surface of the buffer portion contacts an inner surface of the mica sheet defining the coupling hole.

18. The battery module of any one of claim 15 to claim 17, wherein
the restraining member includes a fastening member inserted into the rigid portion, and
the restraining member is coupled to the module housing using the fastening member.

19. A battery pack comprising:
a plurality of battery modules, each including a plurality of battery cells and a module housing accommodating the plurality of battery cells;
a pack frame including a pack cover covering the plurality of battery modules and accommodating the plurality of battery modules; and
a restraining member disposed between the plurality of battery modules and the pack cover,
wherein the restraining member includes a rigid portion connected to the pack cover and a buffer portion connected to the rigid portion and facing the module housing.

20. The battery pack of claim 19, wherein
the pack cover includes an outer surface facing the outside of the battery pack and an inner surface facing the battery module,
the restraining member includes a first fastening member coupled to the rigid portion and penetrating through the pack cover, and
the battery pack includes a second fastening member mounted on the outer surface of the pack cover and coupled to the first fastening member.
